# EUROPEAN PATENT SPECIFICATION

(11) **EP 1 212 956 B1**
(45) Date of publication and mention of the grant of the patent: **16.04.2008**
(21) Application number: 01307553.6
(22) Date of filing: 05.09.2001
(51) Int. Cl.: A44B 11/25, B60R 22/22

(54) **Rotation device of a buckle for use in a vehicle seat belt**
Drehvorrichtung einer Schnalle für Fahrzeugsicherheitsgurt
Dispositif de rotation d'une boucle utilisée pour une ceinture de sécurité de véhicule

(30) Priority: 06.12.2000 KR 2000073870
(43) Date of publication of application: 12.06.2002
(73) Proprietor: Delphi Korea Corporation, Seoul (KR)
(72) Inventor: Kim, Jung-Han, Wonju-shi, Gangwon-do (KR); Lee, Jae-Ho, Seoul (KR)
(74) Representative: Browne, Robin Forsythe

(56) References cited:
- FR-A- 2 411 102
- US-A- 4 638 534
- US-A- 5 855 047

## Description

The present invention relates to a rotation device for an automobile seat belt, buckles known, for instance, from US-A- 4 638 534.

### Description of the Prior Art

In general, an automobile or a vehicle is provided with a seat belt device for limiting the forwarding movement of the vehicle occupant, in an emergency situation, e.g., a collision or a crash, wherein a belt webbing whose one end is wound around a retractor mounted inside a lower portion of a pillar is introduced into the driver's compartment through an internal space of the pillar. A tongue provided in the other end is insertable through an anchor mounted on the pillar into a buckle fixed on a seat frame.

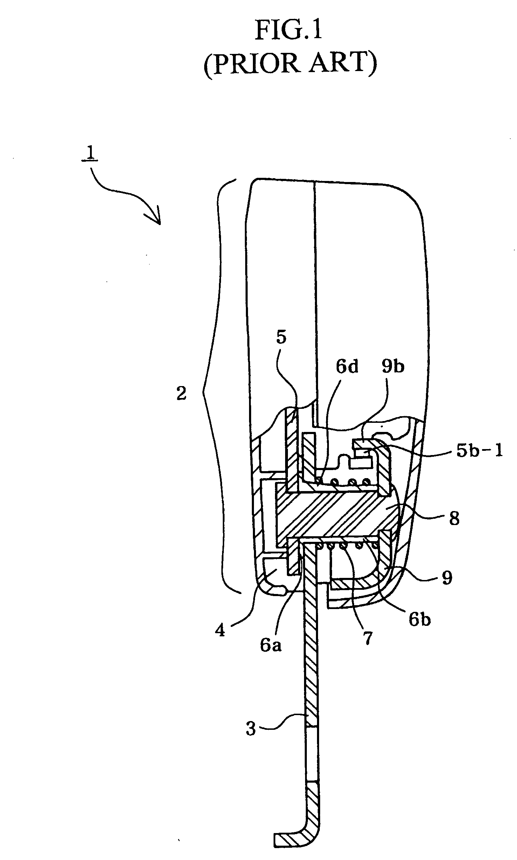

The buckle is rotatable in a predetermined angle through a rotation device. In Fig. 1, a conventional buckle is shown. As shown, the buckle is provided with a buckle main body 2 locking or releasing a tongue plate provided in a belt webbing (not shown), a stalk 3 rotatably connected to a rear portion of the main body 2 at its one end and fixed to a seat frame at the other end.

The main body 2 is made of resin and is provided with an insert hole (not shown) into which the tongue plate is insertable and has a push button (not shown) for releasing the tongue plate engaged into the insert hole.

The main body 2 constructed in this manner is connected to one end of the stalk 3 to be rotatable by a rotation device 4 mounted in a rear inner portion of the main body 2.

In other words, the rotation device 4 includes a bottom plate 5a made of a steel plate and seated on an inner bottom surface of the main body 2. A pair of side plates 5bare formed by an upward bending process from the bottom plate 5a and having a pair of lugs 5b-1 bent inwardly, respectively. A buckle base 5 is provided with a circular plate portion integrally formed with one end of the bottom plate 5a and has a through hole 5d formed therethrough. A collar 6 has a cylindrical shape 6b, a flange 6a integrally formed with one end of the cylindrical shape 6b, which is seated on the circular plate portion 5c of the buckle base 5 to support the buckle base 5, allowing the buckle base 5 to pivot with respect to the stalk 3 in a width direction of the seat. A pair of guide portions 6c are formed at both ends of the flange 6a, the guiding portion 6c surrounding a peripheral surface of the circular plate portion 5c and a protrusion portion 6d protruding from a portion from a center to a bottom of the cylindrical shape 6b to be eccentric. A stalk 3 has an insertion hole 3d into which the cylindrical shape 6b of the collar 6 is inserted. An elastic spring 7 is positioned on an upper surface of the stalk 3 to allow the cylindrical shape 6b of the collar 6 to be inserted into the insertion hole 3a. A rivet 8 is inserted into through hole 5d of the circular plate portion 5c of the buckle base 5, the collar 6, the stalk 3, and the elastic spring 7. A fixing cap 9 has a hole 9a for receiving an upper portion of the rivet 8 to fix the components therebetween and a lug 9b engagable with the lug 5b-1 formed with the side plates 5b of the buckle base 5.

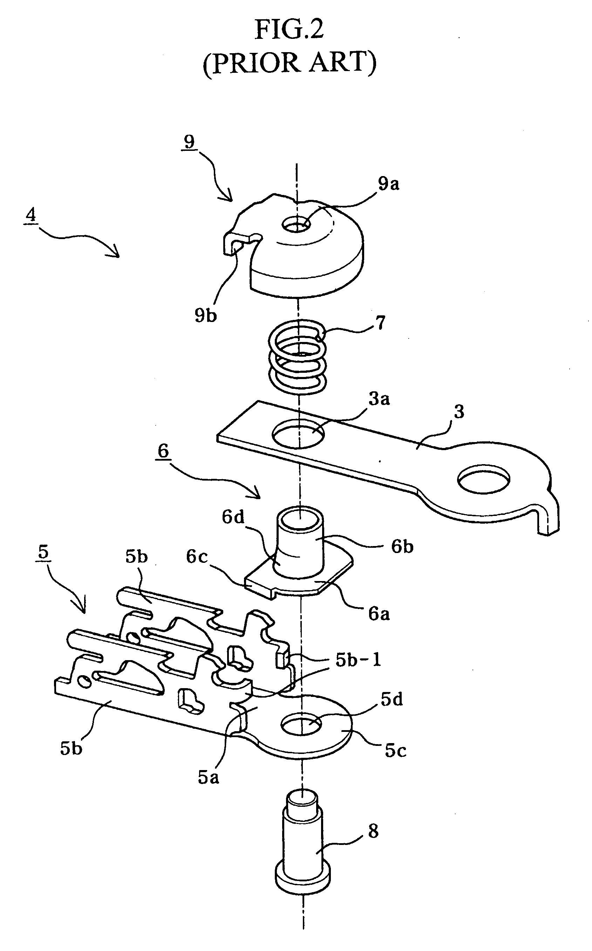

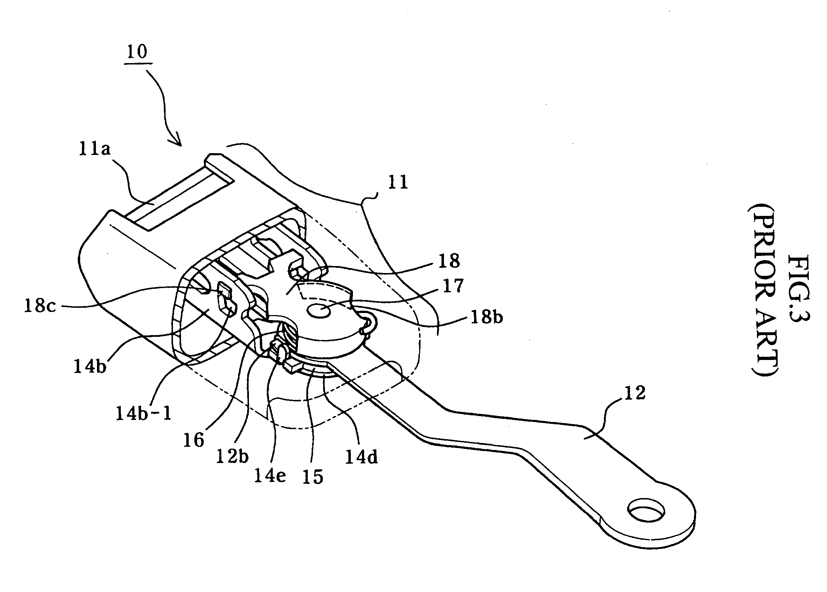

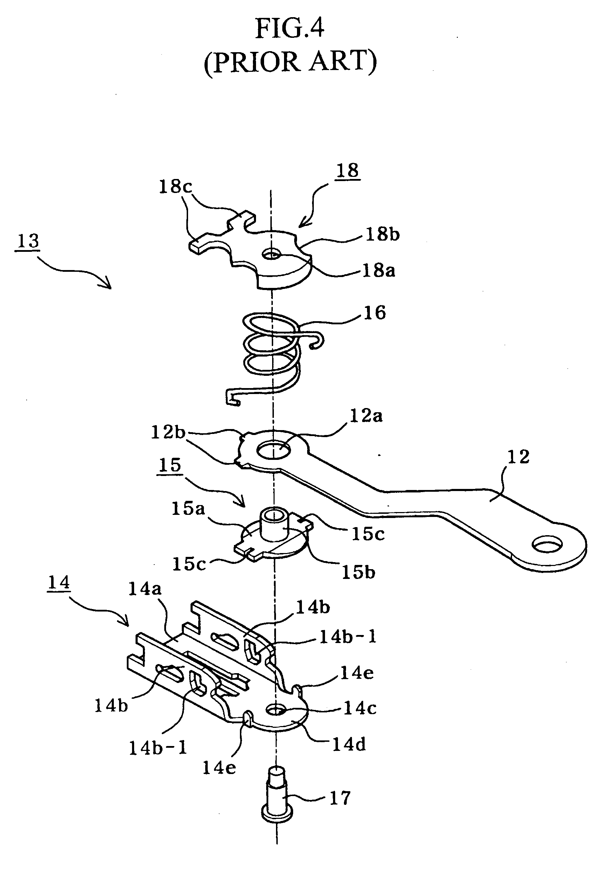

On the other hand, there are shown another prior art buckle in Figs. 3 and 4 which has a same function as that of the buckle shown in Figs. 1 and 2. As shown, the buckle 10 is provided with a main body 11 for locking or releasing a tongue plate provided in a belt webbing, and a stalk 12 which is rotatable at one end, while the other end is fixed to a seat frame.

The main body 11 is made of resin and is provided with an insert hole (not shown) into which the tongue plate is insertable and a push button (11a) for releasing the tongue plate engaged into the insert hole.

The main body 11 constructed in this manner is connected to one end of the stalk 12 to be rotatable by a rotation device 13 mounted in a rear inner portion of the main body 11.

That is, the rotation device 13 includes a bottom plate 14a made of a steel plate and seated on an inner bottom surface of the main body 11. A pair of side plates 14b is formed by an upward bending process from the bottom plate 14a and has a pair of cutouts 14b-1 into which one end of the fixing cap 18 is engaged. A buckle base 14 is provided with a circular plate portion 14d integrally formed with one end of the bottom plate 14a and having a through hole 14c formed therethrough and a pair of lugs 14e for an engagement with a collar 15, to be described later, protruding from both ends of the circular plate portion 14d. A collar 15 has a cylindrical shape 15b, A flange 15a is formed at one end of the cylindrical shape 15b, the flange 15a being seated on the circular plate portion 14d of the buckle base 14 to support the buckle base 14, allowing the buckle base 14 to pivot with respect to the stalk 12 in a width direction of the seat. A pair of recesses 15c for receiving the lugs 14e is formed on the circular plate portion 14d of the buckle base 14. A stalk 12 has an insertion hole 12a into which the cylindrical shape 15b of the collar 15 is inserted and a pair of protrusions 12b outwardly extending from a peripheral surface. An elastic spring 16 is positioned on an upper surface of the stalk 12 to allow the cylindrical shape 15b to be inserted into the insertion hole 12a, one end of the elastic spring 16 being engaged with the protrusion 12b, and the other end being fixed with respect to the fixing cap 18 described later. A rivet 17 is inserted into through hole 14c of the circular plate portion 14d of the buckle base 14, the collar 15, the stalk 12, and the elastic spring 16. A fixing cap 18 has a hole 18a for receiving an upper portion of the rivet 17 to fix the components therebetween. A pair of concave portions 18b is formed around the fixing cap 18 to receive the other end of the elastic spring 16. A lug 9b is engagable into the cutouts 14b-1 formed through the side plates 14b of the buckle base 14.

By the rotation device 4,13 mounted in the buckle 1,10 shown in Figs. 1 through 4, the main body 2,11 of the buckle 1,10 is rotatable with respect to the seat and is returned to an initial state.

That is, by the elastic spring 7,16 provided in the rotation device 4,13 of the buckle 1,10, the main body 2,11 is elastically rotated toward the vehicle occupant. At the moment, the operation of the elastic spring 7,16 and the returning action resulted therefrom are performed through the collar 6,15. The collar 6,15 not only causes an increase of the manufacturing cost and the manufacturing time but also results in noise when it comes into contact with the elastic spring.

Another example of a pivot structure for a seat belt buckle is given in US 4368534. This document discloses a pivoting structure for a seat belt buckle in which there is a base plate and an anchor strip held together by a pin, with a bushing to separate the base plate and anchor strip. There is a spring element which provides torsional and compressive restoring forces for two axis of rotation.

### Summary of the Invention

It is, therefore, a primary object of the invention to provide a rotation device of a buckle for use in an automobile having an elastic spring without necessitating a collar or any equivalent therefor for its operation, thereby reducing the manufacturing cost, the manufacturing time and the occurrence of noise.

In order to achieve the object, the present invention provides a rotation device for an automobile seat belt buckle comprising:
a base plate mounted on a bottom surface of a main body and provided with a circular plate portion at one end, the circular plate portion having a hole formed therethrough, and a pair of integral side walls bent upwardly each side wall having an inwardly bent lug;
a stalk rotatably mounted at one end on an upper surface of the circular plate portion of the base, the stalk having a hole formed therethrough and a stopper portion formed around the end of the stalk and provided with a protrusion for being contacted with an inner surface of the side wall of the base and an abutment for limiting a rotation angle of the main body, the stalk having a protrusion for stopping a rotational movement;
an elastic member having a first end engaging the protrusion for stopping a rotational movement and a through hole formed therethrough, so that the elastic member provides a restoring force when the main body is rotated; the elastic member further comprising a lower portion mounted on an upper surface of the stalk, an upper portion contacted with a bottom surface of the fixing cap, the lower portion having an arcuate shape containing the through hole and a protrusion receiver for receiving the protrusion for stopping the rotational movement, and the upper portion having a circular cross section, and a plurality of torsional holes formed through the elastic member;
a rivet inserted into through hole of the circular plate portion of the base, the holes of the stalk and the elastic member; and
a fixing cap having a hole for receiving an upper portion of the rivet to fix the components therebetween, a lug formed at one side thereof to be engaged with the lug formed with the side walls of the base.

In the rotation device, the stopper portion of the stalk can be composed of plastic material.

In the rotation device, the fixing cap can be provided with an insertion protrusion inserted into the torsional hole of the elastic member to allow the elastic member to be assembled in its twisted state when the fixing cap is assembled.

In the rotation device, the elastic member can be made of one or a compound of the group including urethane, rubber and silicon.

In the rotation device, an inner diameter of a hole formed through the lower portion of the elastic member can be larger than that of the through hole of the upper portion.

### Brief Description of the Drawings

The above and other objects and features of the instant invention will become apparent from the following description of preferred embodiments taken in conjunction with the accompanying drawings, in which:
Fig. 1 illustrates a prior art buckle for use in an automobile seat belt;
Fig. 2 shows an exploded perspective view of a rotation device of the prior art buckle shown in Fig. 1;
Fig. 3 depicts another prior art buckle for use in an automobile seat belt;
Fig. 4 presents an exploded perspective view of a rotation device of the prior art buckle shown in Fig. 1;
Fig. 5 illustrates an exploded perspective view of a rotation device of a buckle for use in an automobile seat belt in accordance with the present invention;
Fig. 6a shows a frontal elevational view of the buckle at its before-rotation state, which is equipped with the rotation device shown in Fig. 5;
Fig. 6b depicts a frontal elevational view of the buckle shown in Fig. 6a, at its after-rotation state;
Fig. 7a presents a side elevational view of the buckle at its before-rotation state, which is equipped with the rotation device shown in Fig. 5 in accordance with the present invention;
Fig. 7b depicts a frontal elevational view of the buckle shown in Fig. 7a, at its after-rotation state;
Fig. 8a discloses a bottom view of an elastic member of the inventive seat belt;
Fig. 8b represents a sectional view of Fig. 8a, when taken along a line A-A';
Fig. 9 illustrates an exploded perspective view of a rotation device of a buckle for use in an automobile seat belt not according to the present invention;
Fig. 10a shows a frontal elevational view of the buckle at its before-rotation state, which is equipped with the rotation device shown in Fig. 9;
Fig. 10b depicts a frontal elevational view of the buckle shown in Fig. 10a, at its after-rotation state;
Fig. 11 a presents a side elevational view of the buckle at its before-rotation state, which is equipped with the rotation device shown in Fig. 9; and
Fig. 11b depicts a frontal elevational view of the buckle shown in Fig. 11a, at its after-rotation state.

### Detailed Description of the Preferred Embodiments

A preferred embodiment of the present invention is described with reference to accompanying drawings.

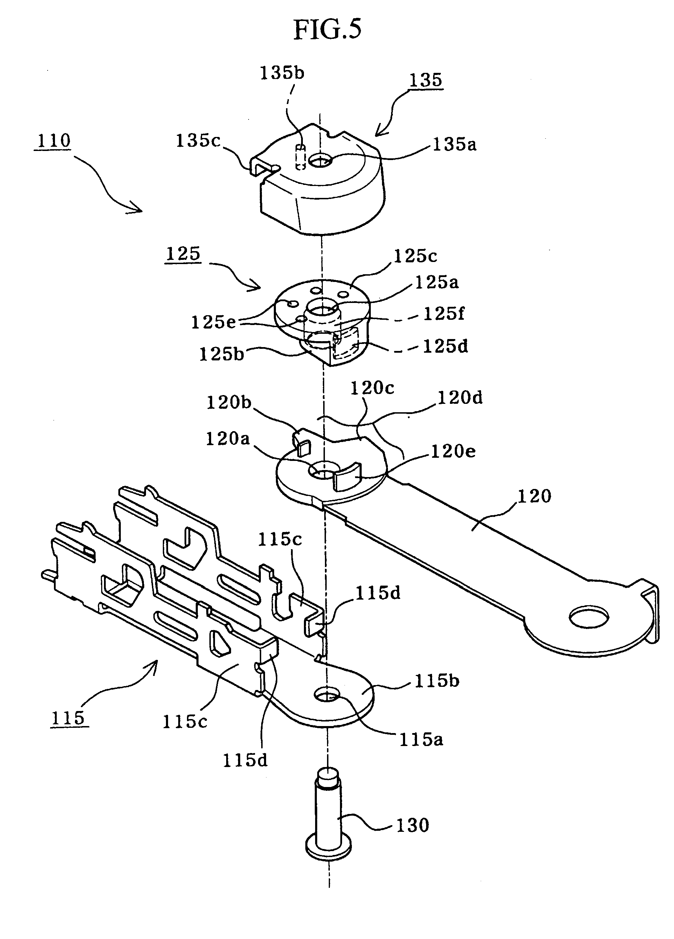

Fig. 5 shows an exploded perspective view of a rotation device of a buckle for use in an automobile in accordance with the present invention.

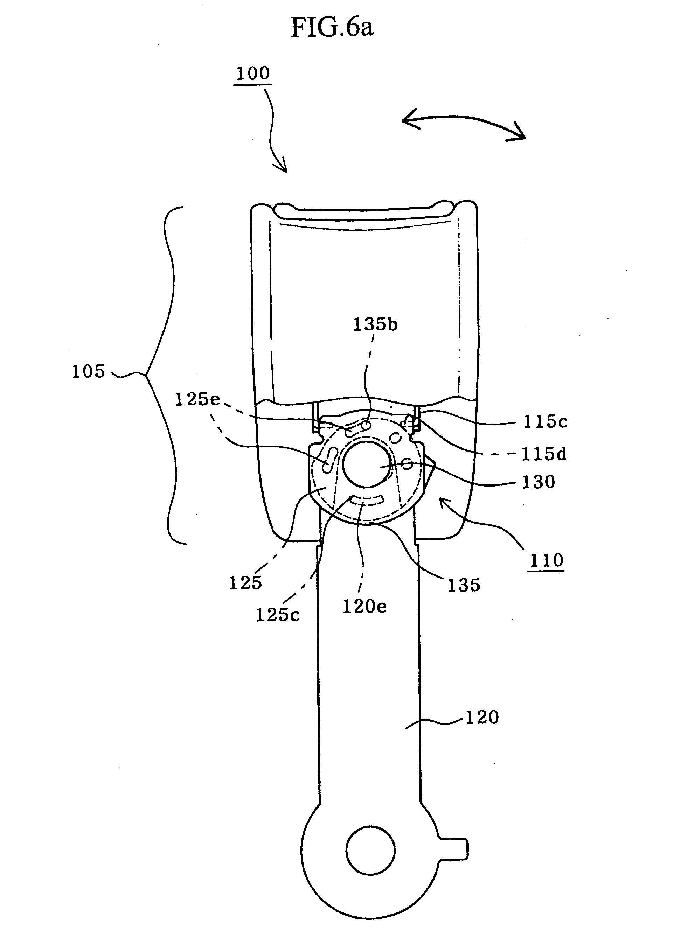

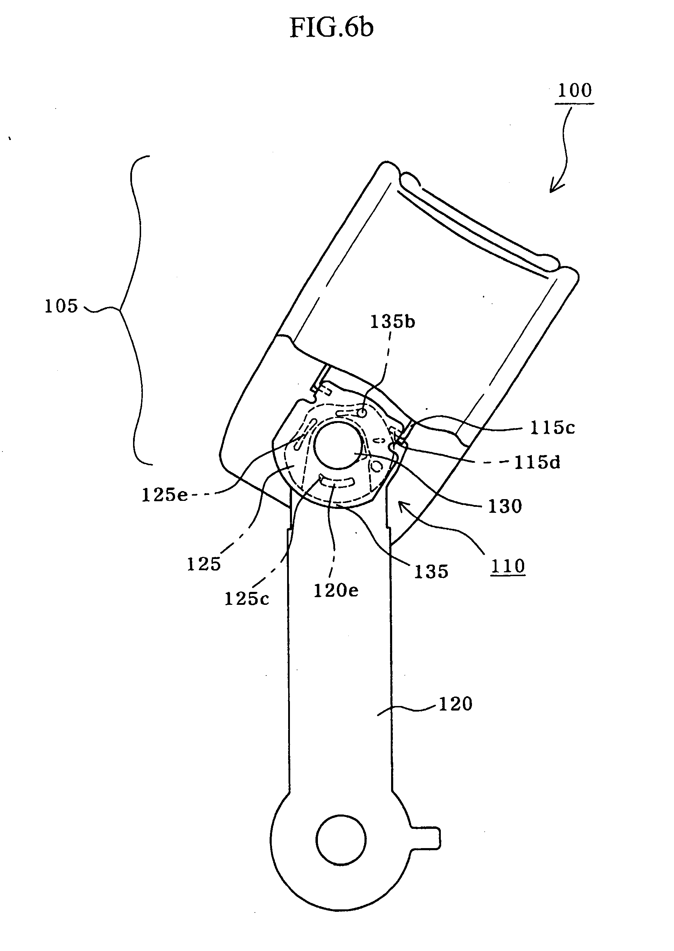

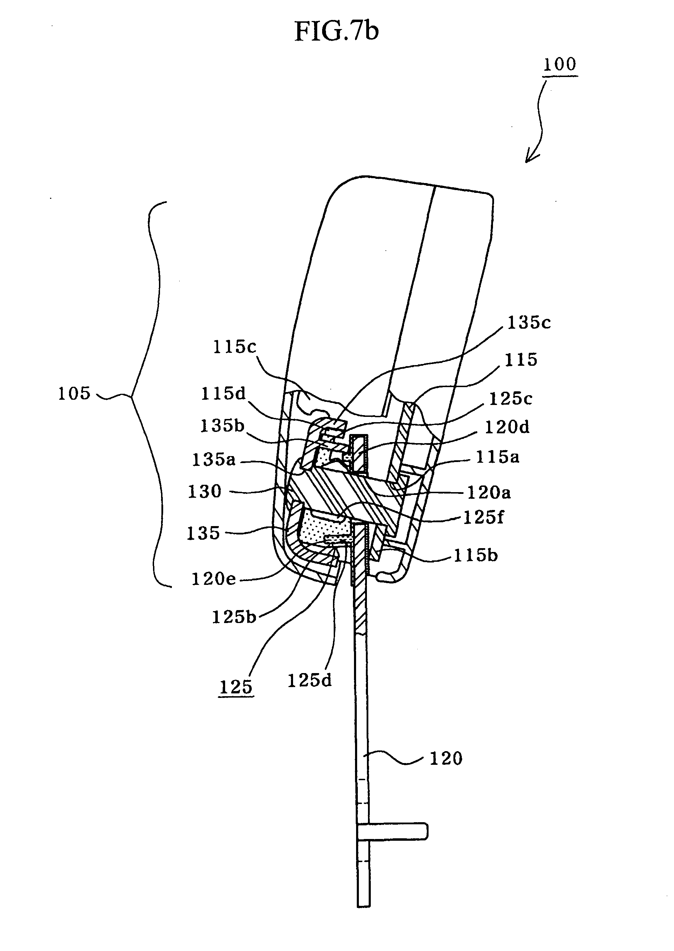

As shown, the rotation device 110 includes a base 115 for allowing a main body 105 of the buckle 100 to be rotatable with respect to a seat, the main body 105 (see Figs. 6a through 7b) being engagable with a tongue plate (not shown). The base 115 has a plate-like shape to be mounted on a bottom surface of the main body 105 and is provided with a circular plate portion 115b at its one end. The circular plate portion 115b provided with a through hole 115a formed therethrough, and a pair of side walls 115c bent upwardly each of which has a lug 115d bent inwardly to be integrally formed with the circular plate portion 115b as well as the pair of side walls 115c, A stalk 120 whose one end is rotatably mounted on an upper surface of the circular plate portion 115b of the base 115, has a hole 120a formed therethrough and a stopper portion 120d formed around the end of the stalk 120 and is provided with a protrusion 120b for being contacted with an inner surface of the side wall 115c of the base 115 and an abutment 120c for limiting a rotation angle of the main body 105. The stopper portion 120d is composed of plastic material so as to reduce a noise and to ensure a proper rotational movement. The stalk 120 has a protrusion 120e for stopping a rotational movement. An elastic member 125 is made of an urethane rubber and provided with a lower portion 125b mounted on an upper surface of the stalk 120. An upper portion 125c is contacted with a bottom surface of a fixing cap 135 described later. A through hole 125a is formed therethrough, the lower portion having an arcuate shape containing the through hole 125a and a protrusion receiver 125d for receiving the protrusion 120e for stopping the rotational movement. The upper portion has a circular cross section, the elastic member 125 having a plurality of torsional holes 125e. A rivet 130 is inserted into through hole 115a of the circular plate portion 115b of the base 115, the holes 120a, 125a of the stalk 120 and the elastic spring 125. The fixing cap 135 has a hole 135a for receiving an upper portion of the rivet 130 to fix the components therebetween. A lug 135c is formed at one side thereof to be engaged with the lug 115d formed with the side walls 115c of the base 11. An insertion protrusion 135b is inserted into the torsional hole 125e of the elastic member 125 to allow the elastic member 125 to be assembled in its twisted state when the fixing cap 135 is assembled.

An inner diameter of a hole 125f formed through the lower portion 125b of the elastic member 125 is larger than that of the through hole 125a of the upper portion 125c. As a result, the lower portion 125b is more easily twisted or compressed than the upper portion 125c.

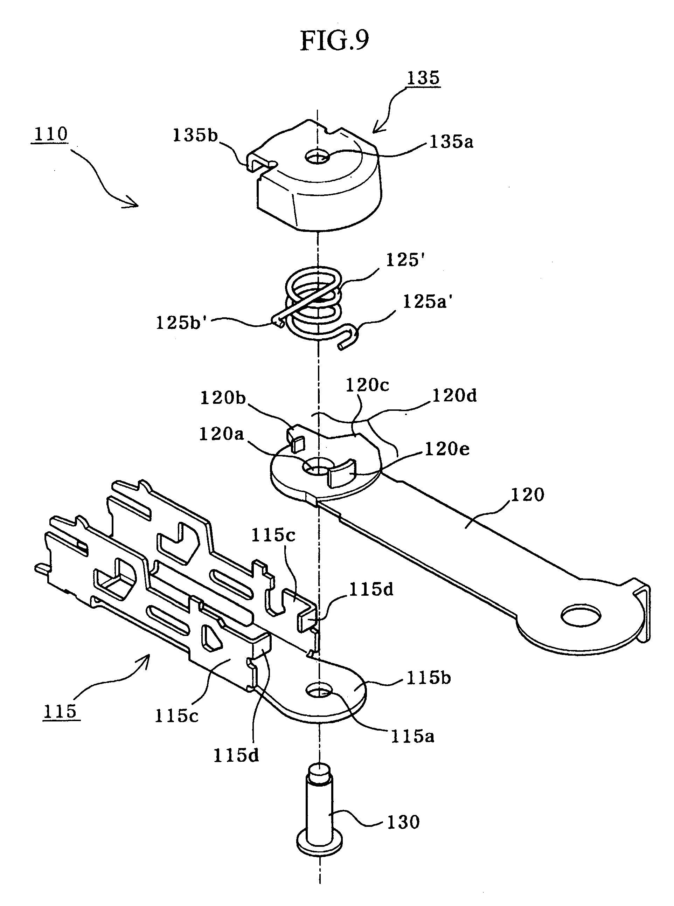

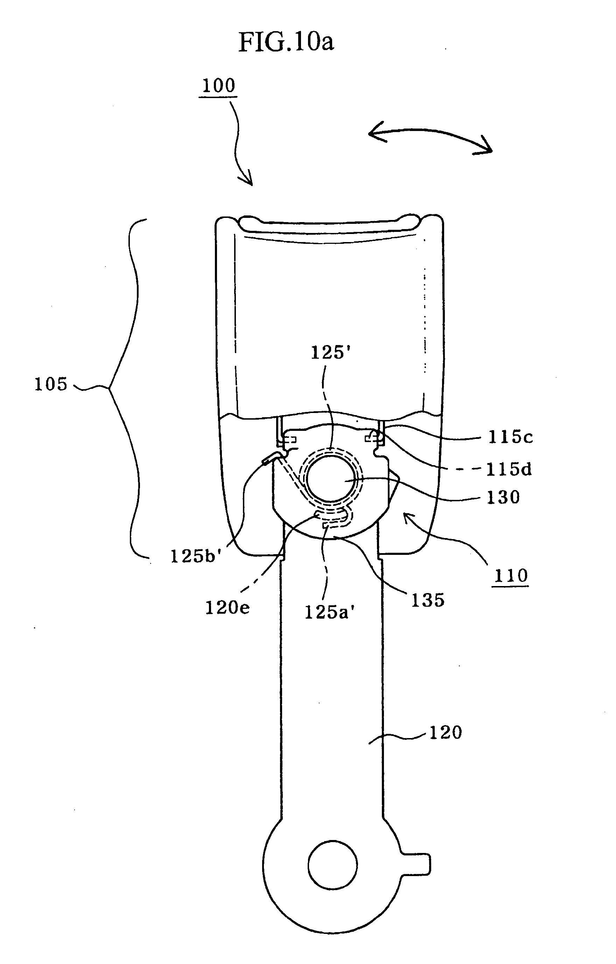

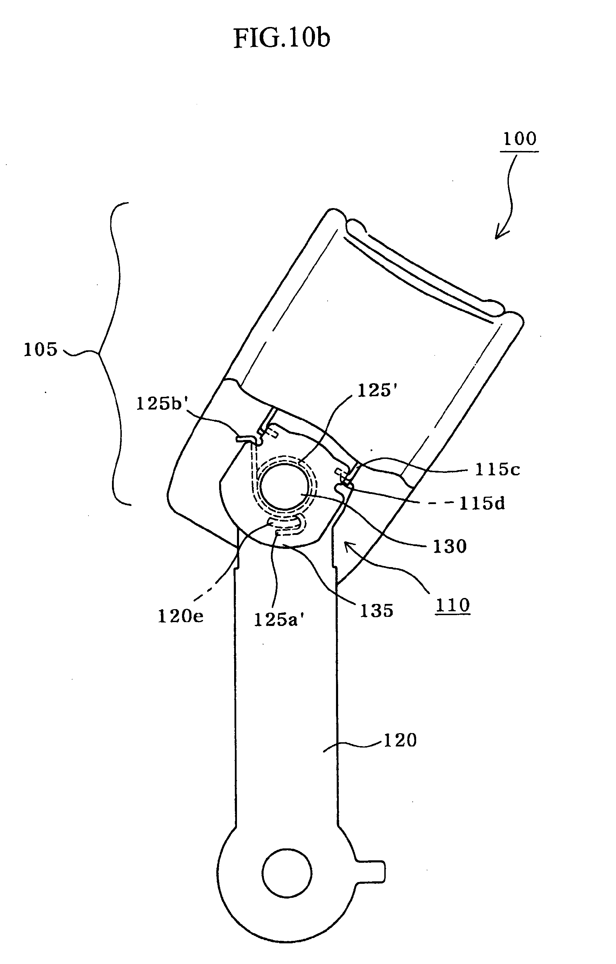

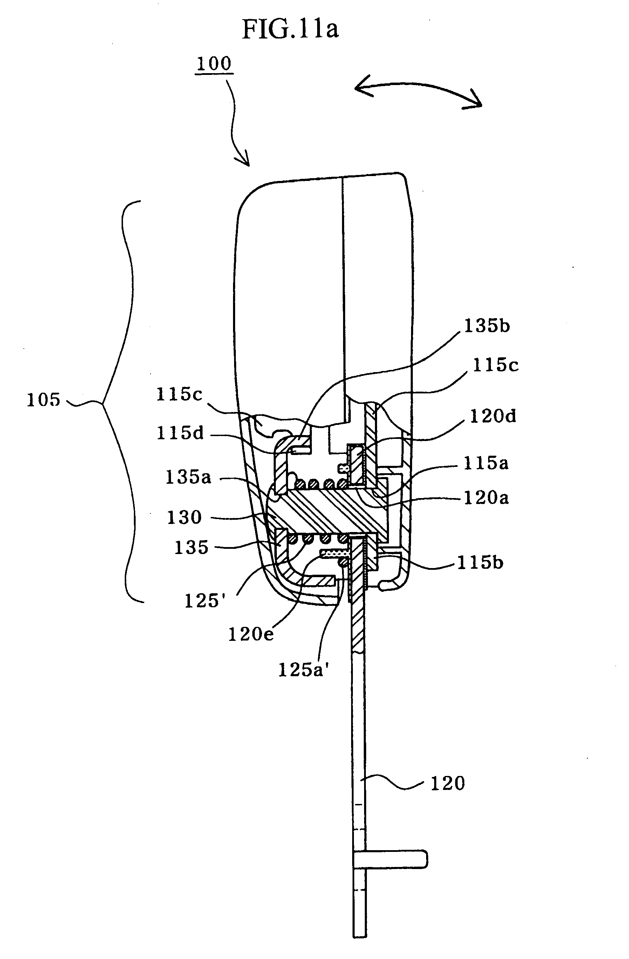

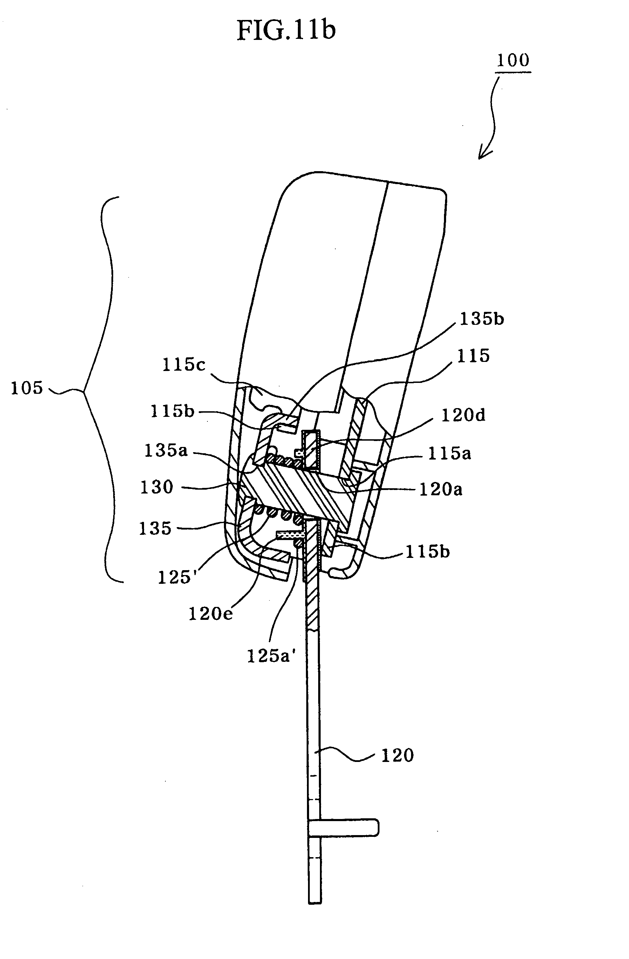

On the other hand, the elastic member 125 may be made of one or compound of the group including urethane, rubber and silicon. Figs. 9 through 11b show an embodiment not according to the invention in which the elastic member 125' comprises a coil spring whose one end is contacted with the protrusion 120e for stopping the rotational movement formed at the stopper portion 120d of the stalk 120, while the other is kept on a peripheral surface of the fixing cap 135 may be used. The elastic member 125' comprising a coil spring is coated with silicon, plastic and rubber for preventing noise during operation.

An upper portion of the rivet 130 protruding over through the hole 135a of the fixing cap 135 is pressed and widened in its diameter to fix the rivet 130 to the fixing cap 135.

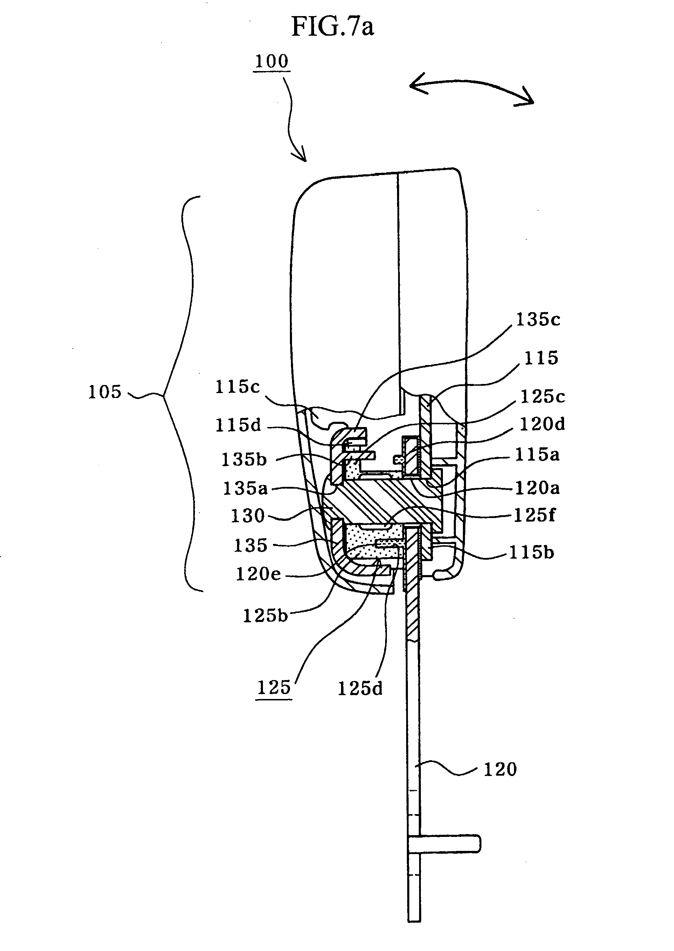

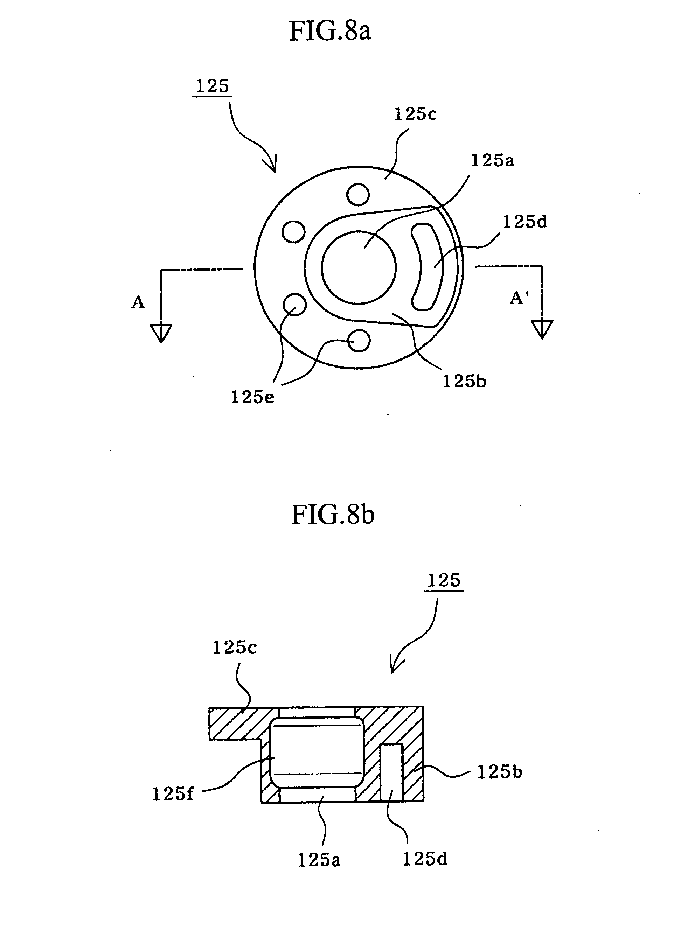

The rotation device constructed in this manner is mounted on a rear portion of the buckle. If the main body 105 of the buckle is rotated for engagement with the tongue plate provided in a belt webbing (not shown), as shown in Figs. 5 through 8b, the main body 105 of the buckle is rotated about the rivet 130 which is inserted from a bottom surface of the through hole 115a of the circular plate portion 115b of the base 115 of the rotation device to hold the components in upward and downward, and leftward and rightward directions. When the tongue plate is released, the main body 105 is rotated to its initial state by an elastic force caused by the elastic member 125.

That is, the protrusion 120e for stopping the rotational movement is inserted into the protrusion receiver 125d formed in the lower portion 125b of the elastic member 125 made of urethane rubber. The insertion protrusion 135b protruding from the fixing cap 135 is inserted into the torsional hole 125e formed in the upper portion 125c of the elastic member 125, being twisted by a predetermined amount. In this state, if the main body 105 is rotated in a forwarding direction or a rightward direction, twist occurs between the stopper portion 120d of the stalk 120 and the bottom surface of the fixing cap 135 about the protrusion receiver 125d formed in the lower portion 125b of the elastic member 125. At the same time, since the hole 125f has a larger diameter, the lower portion 125b is pressurized when the main body 105 is rotated in the forwarding direction.

When the tongue plate is released from the main body 105, the main body 105 is returned to its initial state by the fixing cap 135, the upper portion 125c of the elastic member 125 twisted on the upper surface of the stalk 120, and the pressurized lower portion 125b.

Another embodiment, but not of the present invention, is shown in Figs. 9 through 11b. As shown, a coil elastic spring 125' whose one end is contacted to the protrusion 120e for stopping the rotational movement protruding from the stopper portion 120d of the stalk 120, while the other end is abutted to the peripheral surface of the fixing cap 135 is used to return the main body 105 after the rotation.

The elastic member 125 made of urethane rubber may protect the vehicle occupant, when a crash occurs. That is, when the belt webbing exerts limitation force against the forwarding movement of the vehicle occupant, a further twist and compression of the upper portion 125c and the lower portion 125b of the elastic member 125 may absorb, in part, the shock to protect the vehicle occupant.

The present invention does not necessitate a collar needed in the prior art and reduces the manufacturing cost and the manufacturing time.

Further, in the present invention, since the stalk is applied with plastic material, the noise occurring when the stalk comes into a contact with the elastic member is reduced.

## Claims

1. A rotation device (110) for an automobile seat belt buckle comprising:
a base (115) plate mounted on a bottom surface of a main body (105) and provided with a circular plate portion (115b) at one end, the circular plate portion having a hole (115a) formed therethrough, and a pair of integral side walls (115c) bent upwardly each side wall (115c) having an inwardly bent lug (115d);
a stalk (120) rotatably mounted at one end on an upper surface of the circular plate portion of the base (115), the stalk (120) having a hole formed therethrough and a stopper portion (120d) formed around the end of the stalk (120) and provided with a protrusion (120e) for being contacted with an inner surface of the side wall of the base and an abutment for limiting a rotation angle of the main body (105), the stalk having a protrusion for stopping a rotational movement;
an elastic member (125) having a first end engaging the protrusion (120e) for stopping a rotational movement and a through hole formed therethrough, so that the elastic member (125) provides a restoring force when the main body (105) is rotated; the elastic member further comprising a lower portion mounted on an upper surface of the stalk (120), an upper portion contacted with a bottom surface of the fixing cap (135), the lower portion (125b) having an arcuate shape containing the through hole and a protrusion receiver (125d) for receiving the protrusion for stopping the rotational movement, and the upper portion having a circular cross section, and a plurality of torsional holes formed through the elastic member (125);
a rivet inserted into through hole of the circular plate portion (115b) of the base, (115) the holes of the stalk and the elastic member; and
a fixing cap (135) having a hole (135a) for receiving an upper portion of the rivet to fix the components therebetween, a lug (135c) formed at one side thereof to be engaged with the lug (115d) formed with the side walls (115c) of the base.

2. . The rotation device of claim 1, wherein the stopper portion (120d) of the stalk (120) is applied with plastic material.

3. . The rotation device of claim 1, wherein the fixing cap (135) is provided with an insertion protrusion inserted into the torsional hole (125e) of the elastic member (125) to allow the elastic member (125) to be assembled at its twisted state when the fixing cap (135) is assembled.

4. . The rotation device of claim 1, wherein the elastic member (125) is made of one or compound of the group including the urethane, the rubber and the silicon.

5. . The rotation device of claim 4, wherein an inner diameter of a hole formed through the lower portion of the elastic member is larger than that of the through hole of the upper portion.

## Patentansprüche

1. Eine Drehvorrichtung (110) für ein Fahrzeugsicherheitsgurtschloss, aufweisend:
eine Basisplatte (115), die auf eine Bodenfläche eines Hauptkörpers (105) montiert ist und an einem Ende mit einem kreisförmigen Plattenabschnitt (115b) versehen ist,
wobei der kreisförmige Plattenabschnitt
ein Loch (115a), das dort hindurch ausgebildet ist, und
ein Paar aufwärts gebogener integraler Seitenwände (115c) aufweist, wobei jede Seitenwand (115c) eine nach innen gebogene Nase (115d) aufweist;
einen Stiel (120), der an einem Ende an eine obere Oberfläche des kreisförmigen Plattenabschnitts der Basis (115) rotierbar montiert ist, wobei der Stiel (120)
ein Loch, das dort hindurch ausgebildet ist, und
einen Stopperabschnitt (120d), der
um das Ende des Stiels (120) ausgebildet ist, und
mit einem Vorsprung (120e) versehen ist, um mit einer inneren Oberfläche der Seitenwand der Basis und einem Anschlag zum Begrenzen eines Drehwinkels des Hauptkörpers (105) in Kontakt gebracht zu werden, aufweist,
wobei der Stiel einen Vorsprung zum Anhalten einer Drehbewegung aufweist;
ein elastisches Bauteil (125), das
ein erstes Ende, das mit dem Vorsprung (120e) zum Anhalten einer Drehbewegung in Eingriff gelangt, und
ein dort hindurch ausgebildetes Durchgangsloch aufweist, so dass das elastische Bauteil (125) eine Rückstellkraft bereitstellt, wenn der Hauptkörper (105) gedreht wird;
wobei das elastische Bauteil ferner einen unteren Abschnitt, der an einer oberen Oberfläche des Stiels (120) montiert ist, und einen oberen Abschnitt, der mit der Bodenfläche der Befestigungskappe (135) in Kontakt ist, aufweist,
wobei
der untere Abschnitt (125b) eine das Durchgangsloch beinhaltende gekrümmte Form und einen Vorsprungaufnehmer (125d) zum Aufnehmen des Vorsprungs um die Drehbewegung anzuhalten, aufweist, und
der obere Abschnitt einen kreisförmigen Querschnitt hat und eine Vielzahl Torsionslöcher aufweist, die durch das elastische Bauteil (125) ausgebildet sind;
einen Niet, der in das Durchgangsloch des kreisförmigen Plattenabschnitts (115b) der Basis (115) und die Löcher des Stiels und des elastischen Bauteils eingeführt ist; und
eine Befestigungskappe (135), die
ein Loch (135a) zum Aufnehmen eines oberen Abschnitts des Niets, um die Komponenten dort dazwischen zu befestigen, und
eine Nase (135c), die an einer Seite davon ausgebildet ist, um mit der in den Seitenwänden (115c) der Basis ausgebildeten Nase (115d) in Eingriff zu gelangen, aufweist.

2. Die Drehvorrichtung gemäß Anspruch 1, wobei der Stopperabschnitt (120d) des Stiels (120) mit Plastikmaterial versehen ist.

3. Die Drehvorrichtung gemäß Anspruch 1, wobei die Befestigungskappe (135) mit einem Einführungsvorsprung versehen ist, der in das Torsionsloch (125e) des elastischen Bauteils (125) eingeführt ist, um zu erlauben, dass das elastische Bauteil (125) in seinem verdrehten Zustand zusammengebaut wird, wenn die Befestigungskappe (135) zusammengebaut wird.

4. Die Drehvorrichtung gemäß Anspruch 1, wobei das elastische Bauteil (125) aus einem oder einem Gemisch aus der Gruppe hergestellt ist, die Urethan, Gummi und Silicon beinhaltet.

5. Die Drehvorrichtung gemäß Anspruch 4, wobei ein innerer Durchmesser eines Lochs, dass durch den unteren Abschnitt des elastischen Bauteils ausgebildet ist, größer als der des Durchgangslochs des oberen Abschnitts ist.

## Revendications

1. Dispositif de rotation (110) pour une boucle de ceinture de sécurité d'automobile comprenant :
une plaque de base (115) montée sur une surface inférieure d'un corps principal (105) et pourvue d'une partie de plaque circulaire (115b) à une extrémité, la partie de plaque circulaire présentant un trou (115a) formé à travers celle-ci, et une paire de parois latérales solidaires (115c) fléchies vers le haut, chaque paroi latérale (115c) présentant une oreille (115d) fléchie vers l'intérieur ;
une tige (120) montée de manière rotative à une extrémité sur une surface supérieure de la partie de plaque circulaire de la base (115), la tige (120) présentant un trou formé à travers celle-ci et une partie d'arrêt (120d) formée autour de l'extrémité de la tige (120) et pourvue d'une protubérance (120e) afin d'être mise en contact avec une surface interne de la paroi latérale de la base et une butée destinée à limiter un angle de rotation du corps principal (105), la tige présentant une protubérance destinée à arrêter un déplacement rotationnel ;
un élément élastique (125) présentant une première extrémité se mettant en prise avec la protubérance (120e) pour arrêter un déplacement rotationnel et un trou traversant formé à travers celui-ci, de sorte que l'élément élastique (125) fournit une force de rappel lorsque le corps principal (105) est amené en rotation ; l'élément élastique comprenant en outre une partie inférieure montée sur une surface supérieure de la tige (120), une partie supérieure en contact avec une surface inférieure du capuchon de fixation (135), la partie inférieure (125b) présentant une forme arquée contenant le trou traversant et un récepteur de protubérance (125d) destiné à recevoir la protubérance pour arrêter le déplacement rotationnel, et la partie supérieure présentant une section transversale circulaire, et une pluralité de trous de torsion formés à travers l'élément élastique (125) ;
un rivet inséré à l'intérieur du trou traversant de la partie de plaque circulaire (115b) de la base (115), des trous de la tige et de l'élément élastique ; et
un capuchon de fixation (135) présentant un trou (135a) destiné à recevoir une partie supérieure du rivet pour fixer les composants entre eux, une oreille (135c) formée au niveau d'un de ses côtés pour être mise en prise avec l'oreille (115d) formée avec les parois latérales (115c) de la base.

2. Dispositif de rotation selon la revendication 1, dans lequel la partie d'arrêt (120d) de la tige (120) est recouverte d'une matière plastique.

3. Dispositif de rotation selon la revendication 1, dans lequel le capuchon de fixation (135) est pourvu d'une protubérance d'insertion insérée à l'intérieur du trou de torsion (125e) de l'élément élastique (125) pour permettre à l'élément élastique (125) d'être assemblé dans son état torsadé lorsque le capuchon de fixation (135) est assemblé.

4. Dispositif de rotation selon la revendication 1, dans lequel l'élément élastique (125) est fabriqué à partir d'un composé du groupe comportant l'uréthane, le caoutchouc et le silicone.

5. Dispositif de rotation selon la revendication 4, dans lequel un diamètre interne d'un trou formé à travers la partie inférieure de l'élément élastique est supérieur à celui du trou traversant de la partie supérieure.
